# EUROPÄISCHE PATENTSCHRIFT

(11) **EP 2 507 915 B1**
(45) Veröffentlichungstag und Bekanntmachung des Hinweises auf die Patenterteilung: **02.10.2019**
(21) Anmeldenummer: 10773286.9
(22) Anmeldetag: 22.10.2010
(51) Int. Cl.: H04B 1/00, H04B 7/12, H04B 7/02, H04B 7/08

(54) **VERFAHREN UND SYSTEM ZUM EMPFANG VON RADIOSENDERN**
METHOD AND SYSTEM FOR RECEIVING RADIO TRANSMISSIONS
PROCÉDÉ ET SYSTÈME POUR RECEVOIR DES ÉMETTEURS DE RADIODIFFUSION

(30) Priorität: 02.12.2009 DE 102009047388
(43) Veröffentlichungstag der Anmeldung: 10.10.2012
(73) Patentinhaber: Robert Bosch GmbH, 70442 Stuttgart (DE)
(72) Erfinder: LEHR, Carsten, 30519 Hannover (DE); NYENHUIS, Detlev, 31079 Sibbesse (DE); RISSE, Marcus, 31139 Hildesheim (DE)
(86) Internationale Anmeldenummer: PCT/EP2010/065939
(87) Internationale Veröffentlichungsnummer: WO 2011/067034

(56) Entgegenhaltungen:
- EP-A2- 0 973 286
- EP-A2- 1 265 368
- WO-A1-01/50648
- DE-A1- 10 315 408
- DE-A1- 19 751 189
- DE-A1-102008 012 127
- US-A- 5 870 402
- US-A1- 2006 025 097
- US-A1- 2007 002 961
- US-A1- 2007 275 679
- US-A1- 2009 252 204

## Beschreibung

Die vorliegende Erfindung bezieht sich auf ein Verfahren und ein System zum Empfang von Radiosendern, umfassend mindestens einen A/D-Wandler, um das über mindestens eine Antenne erhaltene gesamte gewünschte Frequenzband, beispielsweise FM Band, zu digitalisieren.

### Stand der Technik

In heutzutage eingesetzten FM Radio-Empfängern sind Tunerbaugruppen enthalten, die dafür geeignet sind, das an der Antenne des Radios eingehende HF-Signal zu filtern, zu verstärken und auf eine geeignete Zwischenfrequenz, beispielsweise 10,7 MHz, zu mischen. Daran schließt sich entweder eine analoge Demodulation des Signals an oder das Signal wird mit einem A/D Wandler digitalisiert und danach digital demoduliert.

So ist es beispielsweise aus der US 6,334,051 B1, der EP 0 973 286 A2, der DE 103 15 408 A1 und der WO 2009/021247 A1 bekannt, zwei oder mehr Rundfunksignale A/D zu wandeln und das entsprechend benötigte Signal auszuwählen.

In der US 2007/0002961 A1 wird ein Kommunikationssystem beschrieben. Dieses besteht aus einem oder mehreren Sendern, wobei jedes der ausgesendeten Signale eine bestimmte Frequenz hat. Außerdem gibt es mehrere Empfänger, welche alle gesendeten Signale empfangen und auf eine mittlere Frequenz modulieren.
Maßnahmen des Diversityempfangs sind darüberhinaus beispielsweise aus der WO 01/50648 A1 bekannt.

Ebenso ist ein Antennen-Diversity-Verfahren aus der US 2006/0025097 A1 bekannt, welche Antenneneigenschaft identifiziert und evaluiert. Außerdem wird ein Verfahren zur Auswahl einer externen Übertragungs-Diversity-Antenne beschrieben. Das effektive Verfahren basiert darauf Antennen zu charakterisieren und aufgrund dieser Informationen zu selektieren.

Ähnlich dazu beschreibt die US 2009/0252204 A1 ein System von Empfängern bestehend aus Antennen dem Empfänger und einem Schaltsystem. Das Schaltsystem schaltet automatisch auf diejenige Antenne, welche das beste digitale Signal bekommt. Sollte kein digitales Signal erreichbar sein, so kann auch auf einen analogen Empfang umgestellt werden.

Ein Nachteil der aus dem Stand der Technik bekannten Tunerbaugruppen ist, dass vor Digitalisierung des Signals dessen Bandbreite stark reduziert wird, so dass zum Empfang zweier oder mehrerer Signale, das heißt Sender, jeweils pro zu empfangenden Signal ein vollständiger Empfängerpfad bestehend aus Tunerbaugruppe und A/D Wandler eingesetzt werden muss.

Heutzutage werden insbesondere in Autoradios aber häufig zwei oder mehr Empfängerpfade benötigt, um insbesondere in einem Autoradio wichtige und erwünschte Funktionen, wie Empfangsverbesserung durch Diversity Algorithmen, Hintergrundtuner für RDS Empfang, die Überwachung von TMC Sendern, usw. zu realisieren.

Das bedeutet, dass mindestens zwei Empfängerpfade, bestehend jeweils aus Tunerbaugruppe und A/D Wandler, notwendig sind. Dies stellt einen baulichen Mehraufwand dar, der nicht erwünscht ist.

Bei neueren Systemvorschlägen ist es vorgesehen, dass das gesamte FM Band mit Hilfe eines Breitband A/D Wandlers digitalisiert wird, um das gesamte Band in digitaler Form vorliegen zu haben. Ein solcher Vorschlag ist beisielsweise der DE 10 2008 012 127 A1 zu entnehmen. Aus dieser Offenlegungsschrift ist die A/D-Wandlung eines ganzen Rundfunkbandes, wie beispielsweise AM oder FM als Grundidee der digitalen Antenne bekannt.

Aus der DE 698 37 941 T2 ist darüberhinaus ein Breitbandempfänger und ein Kanalabtastungsverfahren beim Mobilfunk bekannt. Hierbei erfolgt die A/D-Wandlung eines gesamten Empfangsbandes und es werden die genutzten Kanäle innerhalb eines Bandes gesucht, um dann einen Kanal mit hoher Geschwindigkeit zu ermitteln.

Ausgehend hiervon liegt der vorliegenden Erfindung die Aufgabe zu Grunde, bei einem Verfahren und einem System zum Empfang von Radiosendern der eingangs genannten Art einen noch besseren Empfang von Radiosendern zu erreichen.

Diese Aufgabe wird durch die im Anspruch 1 und Anspruch 2 angegebene Merkmalskombination gelöst.

### Offenbarung der Erfindung

Mit einem erfindungsgemäßen System und Verfahren zum Empfang von Radiosendern wird nun mit mindestens einem A/D-Wandler das über mindestens eine Antenne erhaltene gesamte gewünschte Frequenzband, beispielsweise FM Band, digitalisiert, und es sind ferner Mittel vorgesehen, um zumindest zwei Signale von verschiedenen Sendefrequenzen eines Radiosenders zu demodulieren und auch zu verwenden.

Es wird nun durch die Nutzung des gesamten Empfangsbandes ein optimierter Empfang des Radiosenders erreicht. Hierfür werden die verschiedenen Empfangskanäle eines Radiosenders verwendet.

Üblicherweise ist ein Radioprogramm auf mehreren Sendefrequenzen f₁ bis f_{N} zu empfangen. Mit Hilfe eines Direktabtastungssystems können die Signale dieser Sendefrequenzen in der digitalen Signalverarbeitungseinheit gleichzeitig demoduliert werden. Durch die Kombination der Signale der verschiedenen Sendefrequenzen f₁ bis f_{N} kann ein verbessertes Empfangssignal gegenüber dem Empfang nur einer Sendefrequenz erreicht werden. Hierbei wird eine Empfangsqualität der Signale der unterschiedlichen Sendefrequenzen bewertet wird und jeweils das besser bewertete Signal wird ausgewählt.

Hierbei kann es erfindungsgemäß vorgesehen sein, dass die kombinierten Signale unterschiedlich gewichtet sind. Dies kann zu einem noch besseren Radioempfang führen.

Vorteilhafte Ausgestaltungen der Erfindung sind in den Unteransprüchen gekennzeichnet.

Dabei kann es vorgesehen sein, dass die Bewertung der Empfangsqualität permanent erfolgt und gegebenenfalls auf ein anderes Signal umgeschaltet wird. Permanent bedeutet hier nicht, dass die Bewertung zwingend ununterbrochen stattfinden muss. Vielmehr ist dabei gemäß der beschriebenen Ausführungsform zu verstehen, dass die Bewertung zumindest immer wieder und nicht nur einmalig erfolgt. Dies ist besonders für Autoradios von Vorteil, da hier durch den permanenten Ortswechsel sich die Qualität der einzelnen Signale auch laufend ändert. Mann kann auch sagen, die Bewertung der Qualität des Signals ist zeitabhängig und kann sich beispielsweise aus der Feldstärke und weiteren Signalqualitätsindikatoren zusammensetzen.

Das Umschalten zwischen den Signalen unterschiedlicher Sendefrequenzen kann gemäß einer Ausführungsform direkt erfolgen.

Es kann aber durchaus auch vorteilhaft sein, wenn das Umschalten durch Überblenden der beiden Signale erfolgt.

Gemäß einer weiteren bevorzugten Ausführungsform der vorliegenden Erfindung werden zumindest zwei oder auch mehr Signale unterschiedlicher Sendefrequenz eines Radiosenders miteinander zu einem Signal kombiniert. So kann ein verbessertes Empfangssignal erhalten werden.

Die Gewichtung der Signale kann auch hier wiederum zeitabhängig sein und beispielsweise auf einer Bewertung der Empfangsqualität, beispielsweise durch Bewertung der Feldstärke und/oder der Qualität der Signale beruhen.

Darüberhinaus wäre es aber auch denkbar, dass zwischen verschieden kombinierten Signalen umgeschaltet wird.

Gemäß einer bevorzugten Ausführungsform der vorliegenden Erfindung erfolgt die Kombination der Signale unterschiedlicher Sendefrequenzen vor der Demodulation. Es ist aber auch durchaus möglich, dass die Kombination der Signale nach der Demodulation erfolgt.

Die Kombination der Signale unterschiedlicher Sendefrequenzen kann darüberhinaus noch weiter verbessert werden, wenn die Signale zeitlich synchronisiert sind. Eine solche Synchronisation kann beispielsweise durch Korrelationsverfahren berechnet werden.

Weiterhin kann die Kombination der Signale unterschiedlicher Sendefrequenzen auch noch weiter verbessert werden, wenn eine Anpassung der Amplituden der Signale, beispielsweise des Hubs der Signale nach der Demodulation durchgeführt wird.

Es soll hier betont werden, dass die beschriebene Erfindung nicht auf die Verwendung eines A/D-Wandlers und einer Antenne beschränkt ist, sondern dass sie auch auf Systeme mit mehreren Antennen und/oder mehreren A/D-Wandlern ausgeweitet werden kann. So können die zu kombinierenden Signale der verschiedenen Sendefrequenzen eines Radioprogramms auch über unterschiedliche Antennen empfangen werden und gegebenenfalls über unterschiedliche A/D-Wandler digitalisiert werden.

Die vorliegende Erfindung umfasst auch ein Computerprogrammprodukt, das Programmteile zum Ausführen eines erfindungsgemäßen Verfahrens aufweist.

Daneben umfasst die Erfindung ebenso eine maschinenlesbare, insbesondere computerlesbare, Datenstruktur, erzeugt durch ein Verfahren gemäß der Erfindung und/oder durch mindestens ein Computerprogrammprodukt gemäß der Erfindung.

Weiterhin wird auch ein maschinenlesbarer, insbesondere computerlesbarer, Datenträger, auf dem mindestens einem Computerpogrammprodukt gemäß der Erfindung aufgezeichnet und/oder gespeichert ist und/oder auf dem mindestens eine Datenstruktur gemäß der Erfindung bereit gehalten ist von der vorliegenden Erfindung umfasst.

Ein Ausführungsbeispiel der Erfindung wird nachstehend anhand der Zeichnung näher erläutert. Es zeigen hierbei
Fig. 1 die Direktabtastung eines Frequenzbereiches gemäß einer Ausführungsform der vorliegenden Erfindung;
Fig.2 ein Flussdiagramm eines erfindungsgemäßen Verfahrens gemäß einer bevorzugten Ausführungsform; und
Fig. 3 ein Flussdiagramm eines erfindungsgemäßen Verfahrens gemäß einer weiteren bevorzugten Ausführungsform.

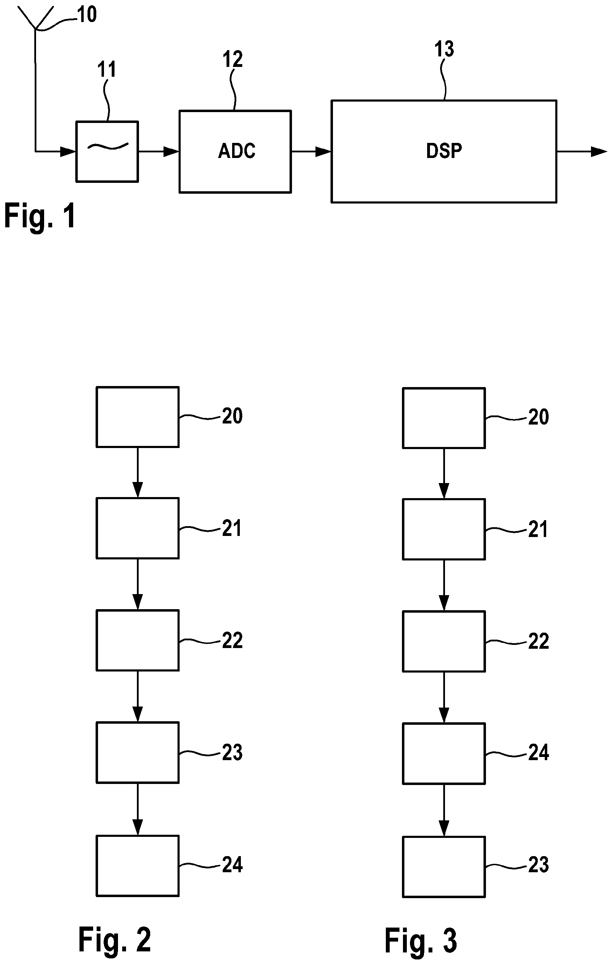

Die Fig. 1 zeigt beispielhaft ein System zur Direktabtastung des gesamten FM Bandes eines Autoradioempfängers. Das System umfasst eine Antenne 10, eine HF-Vorstufe 11, einen A/D-Wandler 12 und eine digitale Signalverarbeitungseinheit 13. Die HF-Vorstufe 11 umfasst dabei beispielsweise einen Bandfilter, gegebenenfalls einen Verstärker und AGC. Die digitale Signalverarbeitungseinheit 13 kann dabei beispielsweise ein DSP sein und in dieser kann in Abhängigkeit von der verfügbaren Rechenleistung eine beliebige Anzahl von Kanälen eines Radiosenders demoduliert werden.

Das Flussdiagramm der Fig. 2 zeigt ein Verfahren zum Empfang von Radiosendern gemäß einer besonders bevorzugten Ausführungsform.

Der Figur 2 ist zu entnehmen, dass zuerst ein Frequenzband beispielsweise über eine Antenne empfangen wird 20. Dieses erhaltene Frequenzband wird dann in einem weiteren Schritt mittel einer HF Vorstufe gefiltert und eventuell verstärkt 21. Dann wird das gesamte Frequenzband mit Hilfe eines Breitband A/D-Wandlers digitalisiert 22. In einem weiteren Schritt werden zumindest zwei Signale von verschiedenen Sendefrequenzen eines Radiosenders demoduliert 23 und daran anschließend kombiniert 24.

Gemäß der in Fig. 3 gezeigten Ausführungsform der Erfindung wird wiederum zuerst ein Frequenzband beispielsweise über eine Antenne empfangen 20. Dieses erhaltene Frequenzband wird dann in einem weiteren Schritt mittel einer HF Vorstufe gefiltert und eventuell verstärkt 21. Dann wird das gesamte Frequenzband mit Hilfe eines Breitband A/D-Wandlers digitalisiert 22. In einem weiteren Schritt werden zumindest zwei Signale von verschiedenen Sendefrequenzen eines Radiosenders kombiniert 24 und daran anschließend demoduliert 23.

### Bezugszeichenliste

- 10: Antenne
- 11: HF-Vorstufe
- 12: AD-Wandler
- 13: Signalverarbeitungseinheit
- 20: Empfang Frequenzband
- 21: Filtern/Verstärken
- 22: Digitalisierung des ganzen Frequenzbandes
- 23: Demodulation der Signale
- 24: Kombination der Signale

## Patentansprüche

1. System zum Empfang von Radiosendern, umfassend mindestens einen Breitband-A/D-Wandler (12), um das über mindestens eine Antenne (10) erhaltene gesamte Empfangsband (20) zu digitalisieren (22), **dadurch gekennzeichnet, dass** Mittel vorgesehen sind, um anschließend zumindest zwei Signale von verschiedenen Sendefrequenzen eines Radiosenders zu demodulieren (23) und mit unterschiedlicher Gewichtung zu kombinieren (24), und eine Empfangsqualität der Signale der unterschiedlichen Sendefrequenzen zu bewerten und jeweils das besser bewertete Signal auszuwählen.

2. Verfahren zum Empfangen von Radiosendern, wobei in mindestens einem Breitband-A/D-Wandler (11), das über mindestens eine Antenne (10) erhaltene gesamte Empfangsband (20) digitalisiert wird (22), **dadurch gekennzeichnet, dass** anschließend zumindest zwei Signale von verschiedenen Sendefrequenzen eines Radiosenders demoduliert (23) und mit unterschiedlicher Gewichtung kombiniert (24) werden und dass eine Empfangsqualität der Signale der unterschiedlichen Sendefrequenzen bewertet wird und jeweils das besser bewertete Signal ausgewählt wird.

3. Verfahren nach Anspruch 2, **dadurch gekennzeichnet, dass** die Bewertung der Empfangsqualität permanent erfolgt und auf ein anderes Signal umgeschaltet wird.

4. Verfahren nach Anspruch 3, **dadurch gekennzeichnet, dass** das Umschalten direkt erfolgt.

5. Verfahren nach Anspruch 3, **dadurch gekennzeichnet, dass** das Umschalten durch Überblenden der beiden Signale erfolgt.

6. Verfahren nach einem der Ansprüche 2 oder 5, **dadurch gekennzeichnet, dass** die Kombination (24) vor oder nach der Demodulation (23) erfolgt.

7. Verfahren nach einem der Ansprüche 2 bis 6, **dadurch gekennzeichnet, dass** die Signale zeitlich synchronisiert sind.

8. Verfahren nach einem der Ansprüche 2 bis 7, **dadurch gekennzeichnet, dass** die Amplituden der Signale angepasst werden.

9. Computerprogrammprodukt, aufweisend Programmteile zum Ausführen eines Verfahrens nach mindestens einem der voranstehenden Ansprüche 2 bis 8.

10. Maschinenlesbarer Datenträger, auf dem mindestens ein Computerprogrammprodukt gemäß Anspruch 9 aufgezeichnet und/oder gespeichert ist.

## Claims

1. System for receiving radio stations, comprising at least one wideband A/D converter (12) in order to digitize (22) the whole reception band (20) received via at least one antenna (10), **characterized in that** there is provision for means in order to subsequently demodulate (23) at least two signals of different transmission frequencies of a radio station and to combine (24) said signals using different weighting, and to rate a reception quality of the signals of the different transmission frequencies and to select the better-rated signal in each case.

2. Method for receiving radio stations, wherein at least one wideband A/D converter (11) is used to digitize (22) the whole reception band (20) received via at least one antenna (10), **characterized in that** at least two signals of different transmission frequencies of a radio station are subsequently demodulated (23) and combined (24) using different weighting and **in that** a reception quality of the signals of the different transmission frequencies is rated and the better-rated signal is selected in each case.

3. Method according to Claim 2, **characterized in that** the reception quality is rated continually and there is a switch to a different signal.

4. Method according to Claim 3, **characterized in that** the switch is made directly.

5. Method according to Claim 3, **characterized in that** the switch is made by cross-fading the two signals.

6. Method according to either of Claims 2 and 5, **characterized in that** the combination (24) takes place before or after the demodulation (23).

7. Method according to one of Claims 2 to 6, **characterized in that** the signals have synchronized timing.

8. Method according to one of Claims 2 to 7, **characterized in that** the amplitudes of the signals are adapted.

9. Computer program product, having program portions for carrying out a method according to at least one of Claims 2 to 8 above.

10. Machine-readable data storage medium on which at least one computer program product according to Claim 9 is recorded and/or stored.

## Revendications

1. Système pour recevoir des émetteurs de radiodiffusion, comprenant au moins un convertisseur analogique-numérique à large bande (12) afin de numériser (22) toute la bande de réception (20) obtenue par le biais d'au moins une antenne (10), **caractérisé en ce qu'**il est prévu des moyens pour démoduler (23) ensuite au moins deux signaux ayant des fréquences d'émission différentes d'un émetteur de radiodiffusion afin de les combiner avec une pondération différente (24), et pour évaluer une qualité de réception des signaux ayant les différentes fréquences d'émission et sélectionner respectivement le signal ayant la meilleure évaluation.

2. Procédé pour recevoir des émetteurs de radiodiffusion, dans lequel, dans au moins un convertisseur analogique-numérique à large bande (11), toute la bande de réception (20) obtenue par le biais d'au moins une antenne (10) est numérisée (22), **caractérisé en ce qu'**au moins deux signaux ayant des fréquences d'émission différentes d'un émetteur radio sont ensuite démodulés (23) et combinés (24) avec une pondération différente, et **en ce qu'**une qualité de réception des signaux ayant les différentes fréquences d'émission est évaluée et le signal ayant la meilleure évaluation est respectivement sélectionné.

3. Procédé selon la revendication 2, **caractérisé en ce que** l'évaluation de la qualité de réception est effectuée en permanence et est convertie en un autre signal.

4. Procédé selon la revendication 3, **caractérisé en ce que** la conversion est effectuée directement.

5. Procédé selon la revendication 3, **caractérisé en ce que** la conversion est effectuée par fusionnement des deux signaux.

6. Procédé selon l'une des revendications 2 ou 5, **caractérisé en ce que** la combinaison (24) est effectuée avant ou après la démodulation (23).

7. Procédé selon l'une des revendications 2 à 6, **caractérisé en ce que** les signaux sont synchronisés dans le temps.

8. Procédé selon l'une des revendications 2 à 7, **caractérisé en ce que** les amplitudes des signaux sont adaptées.

9. Produit de programme informatique comportant des parties de programme destinées à mettre en oeuvre un procédé selon au moins l'une des revendications 2 à 8 précédentes.

10. Support de données lisible par machine sur lequel est enregistré et/ou stocké au moins un produit de programme informatique selon la revendication 9.
